# EUROPÄISCHE PATENTSCHRIFT

(11) **EP 2 950 399 B1**
(45) Veröffentlichungstag und Bekanntmachung des Hinweises auf die Patenterteilung: **28.02.2018**
(21) Anmeldenummer: 14305790.9
(22) Anmeldetag: 27.05.2014
(51) Int. Cl.: H01R 4/70, H02G 15/18, H01R 11/11, H01R 13/512, H01R 13/52

(54) **Abdichtung der Verbindungsstelle zwischen zwei Leitern**
Sealing of the connection between two conductors
Etanchéification de l'emplacement de liaison entre deux conducteurs

(43) Veröffentlichungstag der Anmeldung: 02.12.2015
(73) Patentinhaber: Nexans, 92400 Courbevoie (FR)
(72) Erfinder: Steinberg, Helmut, 92721 Störnstein (DE); Mayer, Udo, 92637 Weiden (DE)
(74) Vertreter: Feray, Valérie

(56) Entgegenhaltungen:
- WO-A1-2014/006647
- DE-A1- 19 741 572
- US-A- 6 069 320
- US-A1- 2013 171 853

## Beschreibung

Die Erfindung bezieht sich auf eine Vorrichtung zum feuchtigkeitsdichten Abdecken der Verbindungsstelle zwischen zwei länglichen, elektrisch leitenden Bauteilen gemäß dem Oberbegriff des Patentanspruchs 1 sowie auf ein Verfahren zum feuchtigkeitsdichten Abdecken der Verbindungsstelle gemäß Patentanspruch 6.

Eine solche Vorrichtung und ein solches Verfahren gehen beispielsweise aus der
US 6,069,320 A hervor.

Im Folgenden sollen mit "elektrisch leitenden Bauteilen" elektrische Einzelleiter, beispielsweise einzelne Litzenleiter oder auch Massivleiter sowie beispielsweise Kabelschuhe oder andere Kontaktelemente, bezeichnet werden.

In der Elektrotechnik und insbesondere in der Automobilelektronik kommt eine Vielzahl von elektrischen Einzelleitern und mit diesen verbundenen Kontaktelementen aus elektrisch leitendem Material zum Einsatz, um elektrische Verbindungen zu Aktuatoren, Sensoren, Steuerelementen, Batterien usw. herzustellen. Ebenfalls können Einzelleiter, beispielsweise ein Aluminiumleiter und ein Kupferleiter, durch Verbinder miteinander verbunden werden. In den meisten Fällen handelt es sich dabei um flexible isolierte Litzenleiter. Der Einzelleiter und das Kontaktelement werden je nach Verbindungsart kraft- und/oder stoffschlüssig miteinander verbunden

Bestehen, wie in den meisten Fällen, Kontaktelement und Leiter oder die zwei miteinander verbundenen Leiter aus unterschiedlichen Metallen (beispielsweise Aluminium und Kupfer), so kann es an der Verbindungsstelle, an welcher der Leiter abisoliert ist und beide Metalle offen liegen, bei einwirkender Feuchtigkeit aufgrund der unterschiedlichen elektrochemischen Standardpotentiale der Metalle zu Kontaktkorrosion kommen. Korrosion hat einen erhöhten Übergangswiderstand zwischen den Leitern zur Folge und kann außerdem die Festigkeit der metallischen Verbindung beeinträchtigen.

Um entsprechende Funktionsstörungen zu vermeiden, muß die Verbindungsstelle zwischen den zwei elektrisch leitenden Bauteilen mediendicht abgedichtet werden. Vorrichtungen und Verfahren zum Abdichten von Verbindungsstellen zwischen zwei elektrischen Bauteilen sind bekannt.

Beispielsweise kann um die Verbindungsstelle ein Schrumpfschlauch gebracht werden, welcher auf seiner Innenseite mit einem Heißklebstoff versehen ist und sich beim Erhitzen um die Verbindungsstelle zusammenzieht. Die Materialverbindung von Schrumpfschlauch und Klebstoff ist jedoch gegenüber starken Temperaturschwankungen, welche beispielsweise in Automobilen auftreten und denen die Leiter ausgesetzt sein können, nicht optimal beständig.

Die Verbindungsstelle kann auch direkt in einem speziellen Spritzgießverfahren mit einem Kunststoff umspritzt werden, um einen isolierenden Körper um die Verbindungsstelle zu formen. Auch diese Art der Abdichtung hält großen Temperaturschwankungen nicht gut stand.

Den genannten Methoden ist gemein, daß die Abdichtung der Verbindungsstelle gegenüber Feuchtigkeit und anderen Umwelteinflüssen nicht in jedem Fall ausreichend und zufriedenstellend ist. Die Schrumpfschlauch- und Umspritzverfahren haben außerdem den Nachteil, daß sie relativ zeitaufwendig, kostspielig und nicht optimal für Einzelleiter geeignet sind.

Die eingangs erwähnte US 6,069,320 A beschreibt eine Vorrichtung mit zugehörigem Verfahren zum Abdecken einer Verbindungsstelle zwischen zwei elektrischen Kabeln. Bei dieser Vorrichtung ist eine rohrförmige Hülse eingesetzt, die an beiden axialen Enden durch axial verlaufende Schlitze aufgefiedert ist. Die Hülse hat außerdem innen an beiden Enden umlaufende Schultern, die als Anlageflächen für zusammendrückbare, ringförmige Dichtelemente dienen. Nach ihrem Einsetzen in die Hülse werden die Dichtelemente durch Überwurfmuttern zusammengedrückt, die auf die Hülse aufgeschraubt werden. Dabei wird eine Ausdehnung in axialer Richtung durch die Schultern verhindert, so daß sich die Dichtelemente nur in radialer Richtung bis zur Anlage an der Wandung der Hülse einerseits und an den Kabeln andererseits ausdehnen können. Dieser Teil der Wandung der Hülse kann wegen der axialen Schlitze ebenfalls zusammengedrückt werden, so daß die Dichtelemente zusätzlich in radialer

Richtung beaufschlagt und dadurch fester an die abzudichtenden Kabel angedrückt werden.

Der Erfindung liegt die Aufgabe zugrunde, eine Vorrichtung und ein Verfahren bereitzustellen, welche eine einfache Montage und Verarbeitung in der Produktion erlauben und eine einwandfreie, temperaturresistente Abdichtung der Verbindungsstelle zwischen zwei elektrisch leitenden Bauteilen gewährleisten.

Diese Aufgabe wird entsprechend den kennzeichnenden Merkmalen des Patentanspruchs 1 bzw. gemäß Patentanspruch 6 gelöst.

Diese Vorrichtung sowie das zugehörige Verfahren erlauben eine sichere wasserdichte Abdichtung einer Verbindungsstelle zweier elektrisch leitender Bauteile. In Montageposition erzeugt die Vorrichtung einen mediendichten Raum um die Verbindungsstelle.

Die Abdichtungsvorrichtung ist besonders robust. Die Dichtelemente umschließen die elektrischen Bauteile dicht und sind gleichzeitig dem Durchmesser der Hülse angepaßt, sodaß der abgedichtete Raum um die Verbindungsstelle aus einer kraftschlüssigen Verbindung zwischen Hülse, Dichtelementen und elektrischen Bauteilen besteht. Die Vorrichtung ist deshalb mit Vorteil in Bereichen mit hohen Temperaturen bzw.

Temperaturschwankungen oder Hochspannungseinrichtungen einsetzbar. Sie ist beispielsweise insbesondere für die Verwendung in Motorfahrzeugen geeignet. Weiterhin ist die Vorrichtung montierbar und auch demontierbar. Deshalb sind mit Vorteil beispielsweise Reparaturen und Instandsetzungen an bereits im Einsatz stehenden Verbindungen besonders einfach durchführbar.

Ein Ausführungsbeispiel des Erfindungsgegenstandes ist in den Zeichnungen dargestellt.

Es zeigen:
Fig. 1 in Einzelteildarstellung Teile einer erfindungsgemäßen Vorrichtung nach einer bevorzugten Ausführungsform.
Fig. 2 die Vorrichtung nach der bevorzugten Ausführungsform in Montageposition.
Fig. 3 ein Dichtelement der erfindungsgemäßen Vorrichtung.
Fig. 4 die Vorrichtung nach der bevorzugten Ausführungsform während eines Montageschritts.
Fig. 5 die Vorrichtung nach der bevorzugten Ausführungsform während eines weiteren Montageschritts.

In den Zeichnungen beziehen sich gleiche Bezugszeichen auf gleiche technische Merkmale.

Eine abzudichtende Verbindungsstelle 10 wird von einem Einzelleiter 11 und einem Kontaktelement 12 gebildet. Der Einzelleiter 11 ist von einer Isolierung 11a umgeben, welche am Ende des Einzelleiters 11 entfernt wurde. Die beiden elektrischen Bauteile können beispielsweise miteinander verpreßt, verschweißt oder nach einem anderen Verfahren miteinander verbunden sein. Beispielsweise besteht das Kontaktelement 12 aus Kupfer und der Einzelleiter 11 aus Aluminium. Die Verbindung kann auch zwischen zwei Einzelleitern oder -adern hergestellt sein, beispielsweise zwischen einem Aluminium- und einem Kupferleiter.

Die Vorrichtung 1 hat eine rohrförmige Hülse 2. Die Hülse 2 umgibt die Verbindungsstelle 10 in Montageposition. Die Hülse 2 besteht beispielsweise aus einem temperaturresistenten Kunststoff. Weiterhin weist die Vorrichtung 1 zwei Dichtelemente 3 und 4 auf. Die Dichtelemente 3 und 4 liegen Montageposition dicht an der Wandung der Hülse 2 an und reichen in diese hinein. Jedes der Dichtelemente 3 und 4 weist eine Durchführung 13 bzw. 14 für eines der beiden elektrisch leitenden Bauteile 11 oder 12 auf. In der dargestellten Ausführungsform ist die Form der Durchführung 13 des ersten Dichtelements 3 dem Querschnitt des Einzelleiters 11 angepaßt, und die Form der Durchführung 14 des zweiten Dichtelements 4 ist dem Querschnitt des Kontaktelements 12 angepaßt. Dadurch ist sichergestellt, daß das jeweils durch eine der Durchführungen 13 oder 14 hindurchgeführte Bauteil 11 bzw. 12 dicht von dem jeweiligen Dichtelement 13 oder 14 umschlossen ist. Im Falle des Einzelleiters 11 liegt das Dichtelement 3 dicht an der Isolierung 11a derselben an. Durch ihre an die Hülse 2 und die elektrischen Bauteile 11 und 12 angepaßte Form sitzen die Dichtelemente 3 und 4 fest innerhalb der Vorrichtung 1 und behalten ihre Position auf dem jeweiligen elektrischen Bauteil 11 bzw. 12 sicher bei.

Die Dichtelemente 3 und 4 bestehen mit Vorteil aus einem elastischen, festen Werkstoff. Beispiele für einen solchen Werkstoff sind Gummi und Silikon. Diese Werkstoffe sind insbesondere sehr hitzebeständig. Die Dichtelemente 3 und 4 erlauben deshalb eine wirksame Abdichtung über weite Temperaturbereiche.

In der dargestellten Ausführungsform haben die Dichtelemente 3 und 4 die Form von Ringen. Diese Ringe haben beispielsweise jeweils an ihrem inneren und an ihrem äußeren Durchmesser lamellenartige Vorsprünge 33a bzw. 33b. Die lamellenartigen Vorsprünge 33a sind besonders geeignet, eventuelle Abweichungen zwischen den Abmessungen der Querschnitte der elektrischen Bauteile und der entsprechenden Durchführungen 13 und 14 auszugleichen, ohne daß die Qualität der Abdichtung beeinträchtigt wird. Außerdem gewährleisten die lamellenartigen Vorsprünge 33b einen einwandfreien, rutschfesten Sitz der Dichtelemente 3 und 4 in der Hülse 2. Die Dichtelemente 3 und 4 haben weiterhin jeweils eine Wulst 23 bzw. 24, welche einen größeren Außendurchmesser als der Rest des jeweiligen Dichtelements hat. Die Wulst 23 bzw. 24 liegt jeweils am Rand 20 an den Enden der Hülse 2 an, wodurch die Dichtwirksamkeit der Dichtelemente 3 und 4 noch weiter erhöht wird.

Die Vorrichtung 1 umfaßt weiterhin zwei Deckel 5 und 6. Die Deckel 5 und 6 dienen als Verschlußmittel der Vorrichtung 1. Die mit den Dichtelementen 3 und 4 versehene Hülse 2 wird jeweils an ihren Enden mit den Deckeln 5 und 6 verschlossen. Die Deckel 5 und 6 weisen dafür, ebenso wie die Dichtelemente 3 und 4, jeweils eine Durchführung 15 bzw. 16 für eines der elektrischen Bauteile 11 und 12 auf. In der dargestellten Ausführungsform ist die Form der Durchführung 15 des ersten Deckels 5 dem Querschnitt des Einzelleiters 11 mit der Isolierung 11a angepaßt, und die Form der Durchführung 16 des zweiten Deckels 6 ist dem Querschnitt des Kontaktelements 12 angepaßt. Der zweite Deckel 6 weist einen Schlitz 16a auf, welcher sich vom Rand des Deckels 6 bis zu der Durchführung 16 erstreckt. Der Schlitz 16a erlaubt das seitliche Aufbringen des Deckels 6 auf das Kontaktelement 12, sodaß dieser nicht in Achsrichtung mit der Durchführung 16 auf das Kontaktelement 12 geschoben werden muß, falls das Kontaktelement 12 einen variierenden Durchmesser aufweist. Im Gegensatz zu den Dichtelementen 3 und 4 muß die Anpassung der Durchführungen 15 und 16 allerdings keine Mediendichtigkeit bewirken. Die Deckel 5 und 6 halten die Dichtelemente 3 und 4 zusätzlich in Montageposition und gewährleisten, daß die Vorrichtung 1 auch unter Zugbelastung intakt bleibt.

In der dargestellten Ausführungsform sind die Deckel 5 und 6 mittels eines Bajonettverschlusses an der Hülse 2 befestigt. Dafür weist die Hülse 2 Vorsprünge 22 auf, welche in entsprechende Schlitze bzw. Kerben (mit den Bezugszeichen 25 und 26 andeutungsweise dargestellt) der Deckel 5 und 6 eingeführt werden können. Die Deckel 5 und 6 sind insbesondere dazu geeignet, die Wulst 23 bzw. 24 der Dichtelemente 3 und 4 zwischen dem Rand 20 der Hülse 2 und den Deckeln 5 und 6 einzuklemmen. Dadurch ist der Sitz der Dichtelemente 3 und 4 innerhalb der Vorrichtung 1 besonders fest und sicher.

Die Deckel 5 und 6 können auch mittels anderer Verschlußarten an der Hülse 2 befestigt werden, beispielsweise mittels eines Schraubverschlusses oder eines Clipverschlusses.

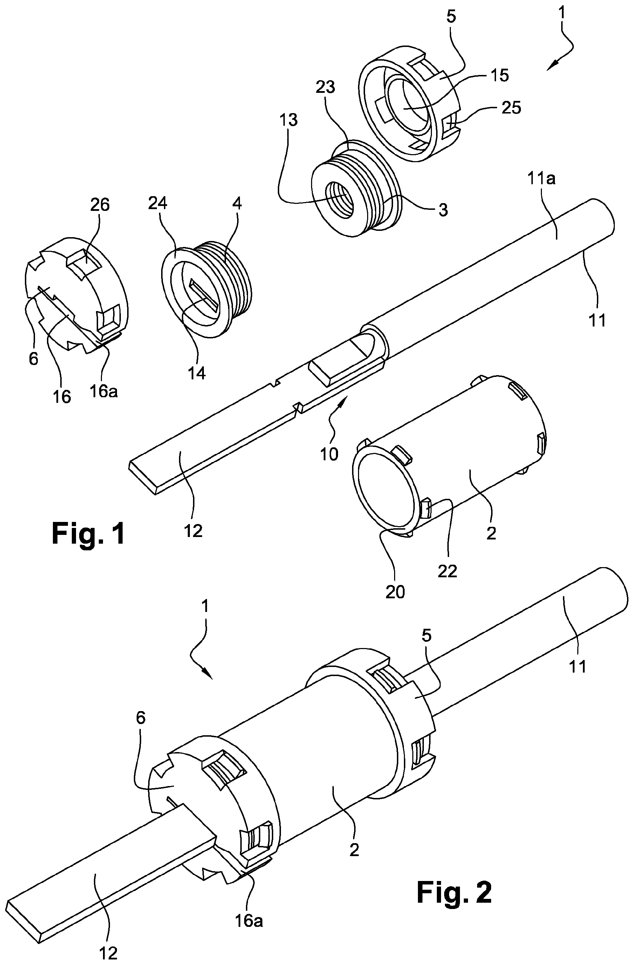

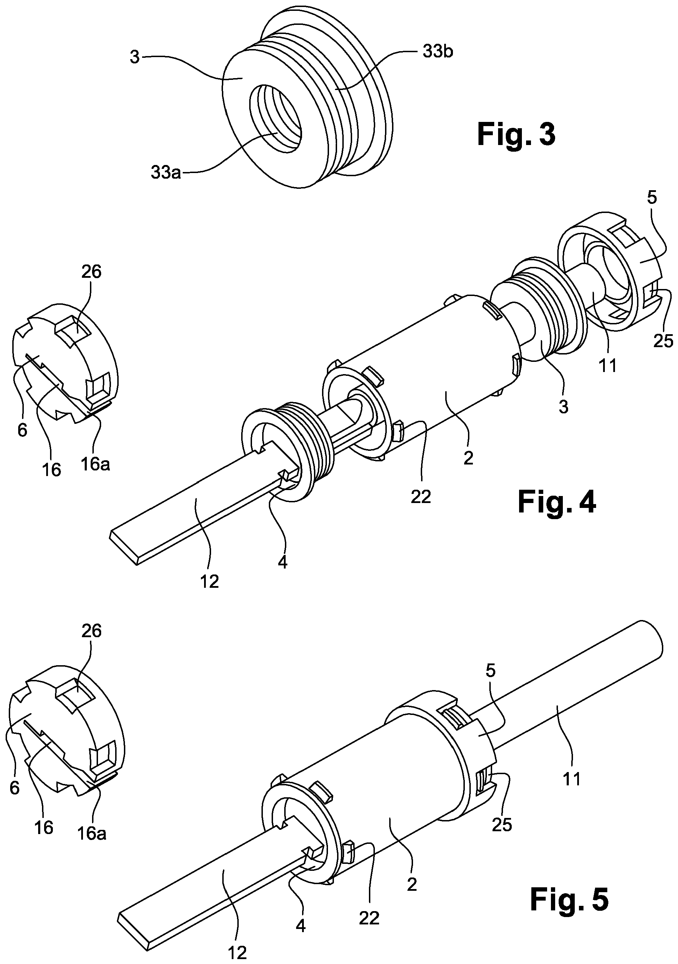

Das Verfahren nach der Erfindung wird im Folgenden anhand der in den Fig. 1 bis 5 dargestellten Ausführungsform der Vorrichtung 1 erläutert:
Zunächst werden der erste Deckel 5 und das erste Dichtelement 3 auf die Isolierung 11a des elektrischen Einzelleiters 11 aufgezogen. Danach wird der Einzelleiter 11 mit dem Kontaktelement 12 verbunden, und die Hülse 2 wird über die Verbindungsstelle 10 geschoben. Anschließend wird das zweite Dichtelement 4 auf das mit der Einzelader 11 verbundene Kontaktteil 12 aufgezogen (Fig. 4). Die Dichtelemente 3 und 4 werden in die Hülse 2 gesteckt, sodaß ein abgedichteter Raum um die Verbindungsstelle 10 entsteht. Der erste Deckel 3 wird an der Hülse befestigt (Fig. 5). Abschließend wird der zweite Deckel 6 auf das Kontaktelement 12 aufgebracht und verschiebesicher am Kontaktelement 12 und an der Hülse 2 festgelegt (Fig. 2). In dem dargestellten Ausführungsbeispiel wird dazu die Hülse 2 zusammen mit dem daran angebrachten ersten Deckel 5 und dem ersten Dichtelement 3 in den zweiten Deckel 6 hineingedreht, bis der Bajonettverschluß einrastet.

Handelt es sich bei den beiden elektrisch leitenden Bauteilen 11 und 12 um Einzeladern, so werden die Dichtelemente 3 und 4 und gegebenenfalls die Deckel 5 und 6 je auf ein elektrisches Bauteil und die Hülse 2 aufgeschoben, bevor die Bauteile miteinander verbunden werden.

## Patentansprüche

1. Vorrichtung (1) zum feuchtigkeitsdichten Abdecken der Verbindungsstelle (10) zwischen zwei länglichen, elektrisch leitenden Bauteilen (11,12), welche eine die Verbindungsstelle (10) umgebende, rohrförmige Hülse (2) aufweist, bei welcher in Montageposition an beiden axialen Enden der Hülse (2) je ein Dichtelement (3,4) angebracht ist, das die Hülse (2) verschließt und dicht an der Wandung derselben anliegt und das eine Durchführung (13,14) für je eines der elektrisch leitenden Bauteile (11,12) aufweist, welche der Form des jeweiligen elektrisch leitenden Bauteils (11,12) so angepaßt ist, daß dasselbe dicht umschlossen ist, bei welcher in Montageposition an den Enden der Hülse (2) je ein dieselbe und das darin befindliche Dichtelement (3,4) umgreifender Deckel (5,6) angebracht ist, der eine Durchführung (15,16) für je eines der elektrisch leitenden Bauteile (11,12) aufweist, wobei die Deckel (5,6) derart an der Hülse (2) angebracht sind, daß jedes der Dichtelemente (3,4) jeweils zwischen dem Deckel (5,6) und der Hülse (2) eingeklemmt ist, **dadurch gekennzeichnet,**
- **daß** jedes Dichtelement (3,4) an seiner Umfangsfläche mit lamellenartigen Vorsprüngen (33a,33b) ausgerüstet ist, die in Montageposition dicht an der Wandung der Hülse (2) anliegen, und
- **daß** jedes der Dichtelemente (3,4) eine einen größeren Außendurchmesser als der Rest des Dichtelements (3,4) aufweisende Wulst (23,24) hat, welche in Montageposition jeweils dicht an einem Rand (20) am Ende der Hülse (2) anliegt.

2. Vorrichtung nach Anspruch 1, **dadurch gekennzeichnet, daß** die elektrisch leitenden Bauteile ein Kontaktelement (12) einerseits und ein elektrischer Leiter (11) andererseits sind.

3. Vorrichtung nach Anspruch 1, **dadurch gekennzeichnet, daß** die elektrischen Bauteile zwei elektrische Leiter sind.

4. Vorrichtung (1) nach Anspruch 1, **dadurch gekennzeichnet, daß** die Deckel (5,6) an der Hülse (2) durch einen Schraubverschluß oder durch einen Bajonettverschluß befestigt sind.

5. Vorrichtung (1) nach Anspruch 1, **dadurch gekennzeichnet, daß** die Dichtelemente (3,4) aus Silikon oder aus Gummi bestehen,

6. Verfahren zum feuchtigkeitsdichten Abdecken der Verbindungsstelle (10) zwischen zwei länglichen, elektrisch leitenden Bauteilen (11,12) mittels einer die Verbindungsstelle (10) umgebenden, rohrförmigen Hülse (2), bei welchem ein erstes Dichtelement (3) auf ein erstes der elektrisch leitenden Bauteile (11) aufgeschoben wird, bei welchem ein zweites Dichtelement (4) auf ein zweites der elektrisch leitenden Bauteile (12) aufgeschoben wird und bei welchem die Hülse (2) so angeordnet wird, daß die Dichtelemente (3,4) in Montageposition je ein axiales Ende der Hülse (2) verschließen und dicht an der Wandung derselben anliegen, wobei das erste Dichtelement (3) eine Durchführung (13) für das erste elektrisch leitende Bauteil (11) und das zweite Dichtelement (4) eine Durchführung (14) für das zweite elektrisch leitende Bauteil (12) aufweisen, wobei die Durchführungen (13,14) der Form des jeweiligen elektrisch leitenden Bauteils (11,12) so angepaßt sind, daß dasselbe in Montageposition dicht umschlossen ist, wobei an den Enden der Hülse (2) in Montageposition je ein dieselbe und das darin befindliche Dichtelement (3,4) umgreifender Deckel (5,6) angebracht wird, der eine Durchführung (15,16) für je eines der elektrisch leitenden Bauteile (11,12) aufweist, und wobei die Deckel (5,6) derart an der Hülse (2) angebracht werden, daß jedes der Dichtelemente (3,4) jeweils zwischen dem Deckel (5,6) und der Hülse (2) eingeklemmt wird, **dadurch gekennzeichnet, daß** Dichtelemente (3,4) in die Hülse (2) eingesetzt werden, die in ihren zur Anlage an der Hülse (2) bestimmten Bereichen außen mit lamellenartigen Vorsprüngen (33a,33b) ausgerüstet sind und jeweils eine einen größeren Außendurchmesser als der Rest des Dichtelements (3,4) aufweisende Wulst (23,24) aufweisen, die in Montageposition zur Anlage an dem jeweiligen Rand (20) am Ende der Hülse (2) gebracht wird.

## Claims

1. A device (1) for the moisture-tight covering of the connecting points (10) between two elongated, electrically conductive components (11, 12), which has a tubular sleeve (2) surrounding the connecting points (10), in which each sealing element (3, 4) is attached in the mounting position to both axial ends of the sleeve (2), which sealing element seals the sleeve (2) and abuts tightly against the wall of the same and which has a feed through (13, 14) for each one of the electrically conductive components (11, 12), which is adapted to the shape of the respective electrically conductive component (11, 12) such that the said component is tightly encompassed, in which each of the same and the lid (5, 6), which engages around the sealing element (3, 4) located therein, is attached in the mounting position to the ends of the sleeve (2), which has a feed through (15, 16) for each of the electrically conducive components (11, 12), wherein the lid (5, 6) is attached to the sleeve (2) in such a manner that eachof the sealing elements (3, 4) is in each case clamped between the lid (5, 6) and the sleeve (2), **characterized in**
- **that** each sealing element (3, 4) is equipped on its peripheral surface with lamellar projections (33a, 33b), which in the mounting position abut tightly against the wall of the sleeve (2) and
- **that** each of the sealing elements (3, 4) has a bead (23, 24) having a larger outer diameter than the remainder of the sealing element (3, 4), which in the mounting position in each case abuts tightly against an edge (20) at the end of the sleeve (2).

2. A device according to Claim 1, **characterized in that** the electrically conductive components are a contact element (12), on the one hand, and an electrical conductor (11) on the other hand.

3. A device according to Claim 1, **characterized in that** the electrical components are two electrical conductors.

4. A device (1) according to Claim 1, **characterized in that** the lid (5, 6) is fastened to the sleeve (2) by a screw cap or by a bayonet cap.

5. A device (1) according to Claim 1, **characterized in that** the sealing element (3, 4) consists of silicone or of rubber.

6. A method for the moisture-tight covering of the connecting points (10) between two elongated, electrically conductive components (11, 12), by means of a tubular sleeve (2) surrounding the connecting points (10), in which a first sealing element (3) is slid onto a first of the electrically conductive components (11), in which a second sealing element (4) is slid onto a second of the electrically conductive components (12) and in which the sleeve (2) is arranged such that the sealing elements (3, 4) seal each of the axial ends of the sleeve (2) in the mounting position and abuts tightly against the wall of the same, wherein the first sealing element (3) has a feed through (13) for the first electrically conductive component (11) and the second sealing element (4) has a feed through (14) for the second electrically conductive component (12), wherein the feed throughs (13, 14) are adapted to the shape of the respectively electrically conductive component (11, 12) such that the said component in the mounting position is tightly encompassed, wherein each of the same and the lid (5, 6), which engages around the sealing element (3, 4) located therein,are attached in the mounting position to the ends of the sleeve (2), which has a feed through (15, 16) for each of the electrically conducive components (11, 12), and wherein the lid (5, 6) is attached to the sleeve (2) in such a manner that each of the sealing elements (3, 4) in each case is clamped between the lid (5, 6) and the sleeve (2), **characterized in that** sealing elements (3, 4) are inserted into the sleeve (2), which are equipped with lamellar projections (33a, 33b) on the outside in their areas designated for contact with the sleeve (2) and in each case have a bead (23, 24) having a larger outer diameter than the remainder of the sealing element (3, 4), which in the mounting position is brought into abutment with the respective edge (20) at the end of the sleeve (2).

## Revendications

1. Dispositif (1) pour le recouvrement étanche à l'humidité du point de liaison (10) entre deux composants allongés électro-conducteurs (11, 12), qui comprend un manchon tubulaire (2) entourant le point de liaison (10), dans lequel, dans la position de montage, au niveau des deux extrémités axiales du manchon (2), est monté un élément d'étanchéité (3, 4) qui obture le manchon (2) et qui s'appuie de manière étanche contre la paroi de celui-ci et qui comprend un passage (13, 14) pour un des composants électro-conducteurs (11, 12), qui est adapté à la forme du composant électro-conducteur (11, 12) de façon à ce que celui-ci soit entouré de manière étanche, dans lequel, en position de montage, au niveau des extrémités du manchon (2), est monté un couvercle (5, 6) entourant celui-ci et l'élément d'étanchéité (3, 4) se trouvant à l'intérieur, qui comprend un passage (15, 16) pour un des composants électro-conducteurs (11, 12), les couvercles (5, 6) étant montés sur le manchon (2) de façon à ce que chacun des éléments d'étanchéité (3, 4) soit coincé entre le couvercle (5, 6) et le manchon (2),
**caractérisé en ce que**
- chaque élément d'étanchéité (3, 4) est muni, au niveau de sa surface circonférentielle, de saillies en forme de lamelles (33a, 33b), qui s'appuient, dans la position de montage, de manière étanche, contre la paroi du manchon (2) et
- chacun des éléments d'étanchéité (3, 4) comprend un bourrelet (23, 24) présentant un diamètre extérieur supérieur au reste de l'élément d'étanchéité (3, 4), qui s'appuie, dans la position de montage, de manière étanche contre un bord (20) à l'extrémité du manchon (2).

2. Dispositif selon la revendication 1, **caractérisé en ce que** les composants électro-conducteurs sont d'une part un élément de contact (12) et d'autre part un conducteur électrique (11).

3. Dispositif selon la revendication 1, **caractérisé en ce que** les composants électriques sont deux conducteurs électriques.

4. Dispositif selon la revendication 1, **caractérisé en ce que** les couvercles (5, 6) sont fixés au manchon (2) par une fermeture vissée ou par une fermeture à baïonnette.

5. Dispositif selon la revendication 1, **caractérisé en ce que** les éléments d'étanchéité (3, 4) sont constitués de silicone ou de caoutchouc.

6. Procédé de recouvrement étanche à l'humidité du point de liaison (10) entre deux composants allongés électro-conducteurs (11, 12) au moyen d'un manchon tubulaire (2) entourant le point de liaison (10), dans lequel un premier élément d'étanchéité (3) est coulissé sur un premier des composants électro-conducteurs (11), dans lequel un deuxième élément d'étanchéité (4) est coulissé sur un deuxième des composants électro-conducteurs (12) et dans lequel le manchon (2) est disposé de façon à ce que les éléments d'étanchéité (3, 4) obturent chacun, dans la position de montage, une extrémité axiale du manchon (2) et s'appuient de manière étanche contre la paroi de celui-ci, le premier élément d'étanchéité (3) comprenant un passage (13) pour le premier composant électro-conducteur (11) et le deuxième élément d'étanchéité (4) comprenant un passage (14) pour le deuxième composant électro-conducteur (12), les passages (13, 14) étant adaptés à la forme du composant électro-conducteur (11, 12) correspondant de façon à ce que celui-ci soit entouré de manière étanche dans la position de montage, moyennant quoi, au niveau de chacune des extrémités du manchon (2), dans la position de montage, est monté un couvercle (5, 6) entourant celui-ci et l'élément d'étanchéité (3, 4) se trouvant à l'intérieur, qui comprend un passage (15, 16) pour un des composants électro-conducteurs (11, 12) et les couvercles (5, 6) étant montés sur le manchon (2) de façon à ce que chacun des éléments d'étanchéité (3, 4) soit coincé chacun entre le couvercle (5, 6) et le manchon (2), **caractérisé en ce que** des éléments d'étanchéité (3, 4) sont insérés dans le manchon (2), qui sont munis, au niveau de leurs parties conçues pour un appui contre le manchon (2), de saillies en forme de lamelles (33a, 33b) et qui comprennent chacun un bourrelet (23, 24) présentant un diamètre extérieur supérieur au reste de l'élément d'étanchéité (3, 4), qui est mis, dans la position de montage, en appui contre le bord (20) correspondant au niveau de l'extrémité du manchon (2).
